# EUROPÄISCHE PATENTSCHRIFT

(11) **EP 1 423 671 B1**
(45) Veröffentlichungstag und Bekanntmachung des Hinweises auf die Patenterteilung: **16.11.2005**
(21) Anmeldenummer: 02745027.9
(22) Anmeldetag: 08.07.2002
(51) Int. Cl.: G01L 19/12

(54) **DRUCKANZEIGEVORRICHTUNG**
PRESSURE INDICATOR
DISPOSITIF D'INDICATION DE PRESSION

(30) Priorität: 07.09.2001 CH 166401
(43) Veröffentlichungstag der Anmeldung: 02.06.2004
(73) Patentinhaber: Gebr. Gloor AG, 3401 Burgdorf (CH)
(72) Erfinder: BERNHARD, Ernst, CH-2558 Aegerten (CH)
(74) Vertreter: Isler & Pedrazzini AG
(86) Internationale Anmeldenummer: PCT/CH2002/000367
(87) Internationale Veröffentlichungsnummer: WO 2003/023346

(56) Entgegenhaltungen:
- GB-A- 2 353 864
- US-A- 5 014 786
- US-A- 5 027 740
- US-A- 5 189 979
- US-A- 5 213 057
- US-A- 5 339 764

## Beschreibung

Die vorliegende Erfindung bezieht sich auf das Gebiet der Anzeige von Drücken, die in einem mit einem Medium, insbesondere einem Gas, gefüllten Volumen herrschen. Sie betrifft eine Druckanzeigevorrichtung gemäss dem Oberbegriff des Anspruchs 1.

Eine solche Druckanzeigevorrichtung ist z.B. aus der JP-A2-04145335 bekannt.

### STAND DER TECHNIK

Herkömmliche Druckanzeigevorrichtungen (Manometer) zeigen meist auf einem Zifferblatt mittels eines um eine Drehachse drehbaren Zeigers den aktuellen Druck in einem mit einem Medium, insbesondere Gas, gefüllten Volumen an. Der Druck wird durch eine Rohrfeder, Kapselfeder, Plattenfeder oder dgl. in eine kleine Drehbewegung umgesetzt. Es sind aber auch Manometer bekannt (JP-A2-04145335), bei denen durch den Druck ein in einem Zylinder angeordneter Kolben gegen die Kraft einer Feder verschoben und der Verschiebungsweg in eine Zeigerdrehung um die Verschiebungsachse umgesetzt wird. Andere Manometer, wie sie beispielsweise zum Anzeigen von Reifendrücken an einem Reifenventil eingesetzt werden, zeigen den Verschiebungsweg des Kolbens direkt auf einer sich in Verschiebungsrichtung erstreckenden Skala an (siehe z.B. die US-A-3,592,218).

Bei den meisten Manometern wird eine durch den Druck verursachte kleine Bewegung mechanisch übersetzt, um einen gut sichtbaren Zeigerausschlag zu erhalten. Druckstösse, mechanische Vibrationen oder gar Schläge können solche Instrumente beschädigen. Werden sie stark beschädigt oder gar weggebrochen, entsteht ein Loch, welches den Austritt des Fluids bzw. Gases zur Folge hat. Die Baugrösse lässt den Einsatz solcher Instrumente in Fällen, in denen nur wenig Platz zur Verfügung steht, gar nicht zu. Andererseits ist eine vergleichsweise grosse Ablesegenauigkeit infolge des grossen Zifferblattes möglich. Bei den direkten Anzeigen gemäss der US-A-3,592,218 ist eine Uebersetzung nicht gegeben.

Aus der US-A-5,339,764 ist eine Vorrichtung zur optischen Anzeige des Drucks in einem Medium bekannt, bei der ein mit dem Druck beaufschlagter Kolben gegen den Druck einer Feder eine farbige Fläche gegen die entsprechend geformte Innenwand eines optisch transparenten Abschlussteils drückt, welche von einem Ring einer anderen Farbe umschlossen ist. Liegt die farbige Fläche an der Innenwand an, ergibt sich von aussen gesehen ein Farbumschlag. Hiermit ist jedoch nur die Anzeige eines einzigen Druckes möglich.

Die US-A-5,027,740 offenbart eine Reifendruckanzeigevorrichtung, bei der ein mit dem Druck beaufschlagter hohlzylindrischer Kolben gegen den Druck einer Feder einen zentralen farbigen Stift je nach Druck mehr oder weniger weit abdeckt. Es liegt hier eine stetige Druckanzeige vor, die nicht für das Ablesen einzelner Druckstufen geeignet ist.

Aus der US-A-5,014,786 ist eine Druckprüfvorrichtung bekannt, bei der ein mit dem Druck beaufschlagter Kolben einen hinter einem Frontglas angeordneten und mit einer lichtabsorbierenden Flüssigkeit gefüllten flachen Beutel gegen den Druck einer Feder ab einem bestimmten Druck soweit zusammendrückt, dass die lichtabsorbierenden Flüssigkeit aus dem zusammengedrückten Bereich nach aussen gequetscht wird und durch das Frontglas fallendes Licht zurückreflektiert werden kann. Hiermit ist wie bei der US-A-5,339,764 nur die Anzeige eines einzigen Druckes möglich.

### DARSTELLUNG DER ERFINDUNG

Es ist Aufgabe der Erfindung, eine Druckanzeigevorrichtung zu schaffen, die eine gut ablesbare optische Anzeige des Druckes mit den einfachsten mechanischen Mitteln ermöglicht, mechanisch ausserordentlich robust ist, sehr kompakt aufgebaut ist, und sich leicht an einen unter Druck stehenden Behälter anbauen lässt.

Die Aufgabe wird durch die Gesamtheit der Merkmale des Anspruchs 1 gelöst. Der Kern der Erfindung besteht darin, dass die optischen Anzeigemittel ein quer zur Achse angeordnetes Frontglas und durch den Kolben relativ zum Frontglas bewegbare Anzeigeelemente umfassen, welche jeweils bei unterschiedlichen Drücken zwischen einer ersten Position, in welcher sie von aussen durch das Frontglas optisch sichtbar sind und einer zweiten Position, in welcher sie von aussen durch das Frontglas optisch nicht sichtbar sind, wechseln.

Die erfindungsgemässe Druckanzeigevorrichtung ist dadurch gekennzeichnet, dass die optischen Anzeigemittel eine Mehrzahl von Zeigern umfassen, dass sich die Zeiger beim druckbedingten Verschieben des Kolbens in Achsenrichtung quer zur Achse, insbesondere in radialer Richtung, bewegen, und dass am Frontglas optische Abdeckmittel vorgesehen sind, durch welche die Zeiger je nach Druck von aussen durch das Frontglas sichtbar oder nicht sichtbar sind.

Die Zeiger sind vorzugsweise Teil einer mit dem Kolben in Eingriff stehenden Zeigerfeder, und die Zeigerfeder ist derart ausgebildet, dass sich die Zeiger beim druckbedingten Verschieben des Kolbens in Achsenrichtung und beim damit verbundenen Verbiegen der Zeigerfeder quer zur Achse bewegen.

Insbesondere ist die Zeigerfeder scheibenförmig ausgebildet, wobei die Zeigerfeder sich mit ihrem äusseren Rand an einem darüber angeordneten, am Gehäuse befestigten Anschlagring abstützt und im zentralen Bereich von dem Kolben beaufschlagt wird, und wobei die Zeiger sich in Achsenrichtung nach oben erstrecken und am oberen Ende quer zur Achsenrichtung abgekröpft sind und im abgekröpften Bereich unterschiedlich lange Zeigerköpfe aufweisen, und wobei die Abdeckmittel einen auf der Unterseite des Frontglases angeordnete, kreisförmige bedruckte Fläche umfassen, welche die Zeigerköpfe im drucklosen Zustand der Druckanzeigevorrichtung optisch abdeckt.

Besonders vielseitig und einfach einsetzbar ist die erfindungsgemässe Druckanzeigevorrichtung, wenn sie die äussere Gestalt einer Schraube mit einem Kopfteil und einem Gewindeteil aufweist, und wenn die optischen Anzeigemittel im Kopfteil und der Kolben im Gewindeteil angeordnet sind.

Bei einer solchen kompakten Druckanzeigevorrichtung lässt sich die Sicherheit und Tauglichkeit im rauhen Einsatz weiter erhöhen, wenn zwischen dem Kopfteil und dem Gewindeteil im Gehäuse eine Sollbruchstelle vorgesehen ist, wenn der Kolben unterhalb der Sollbruchstelle mittels einer Dichtung abgedichtet ist, und wenn zwischen dem oberen Ende des Kolbens und dem Stempel bzw. der Zeigerfeder eine Druckplatte zum Verteilen des Kolbendruckes angeordnet ist.

Weitere Ausführungsformen ergeben sich aus den abhängigen Ansprüchen.

### KURZE ERLÄUTERUNG DER FIGUR

Die Erfindung soll nachfolgend anhand von Ausführungsbeispielen im Zusammenhang mit der Zeichnung näher erläutert werden. Es zeigen
- Fig. 1: einen Längsschnitt durch eine Druckanzeigevorrichtung mit gummielastischem Stempel;
- Fig. 2: einen Längsschnitt durch ein bevorzugtes Ausführungsbeispiel einer Druckanzeigevorrichtung nach der Erfindung mit Zeigerfeder; und
- Fig. 3: das Ausführungsbeispiel aus Fig. 2 in der Draufsicht von oben bei geringem oder fehlendem Druck (Fig. 3a; Zeigerköpfe sind abgedeckt) und bei hohem Druck (Fig. 3b; Zeigerköpfe treten hinter der Abdeckung hervor).

### WEGE ZUR AUSFÜHRUNG DER ERFINDUNG

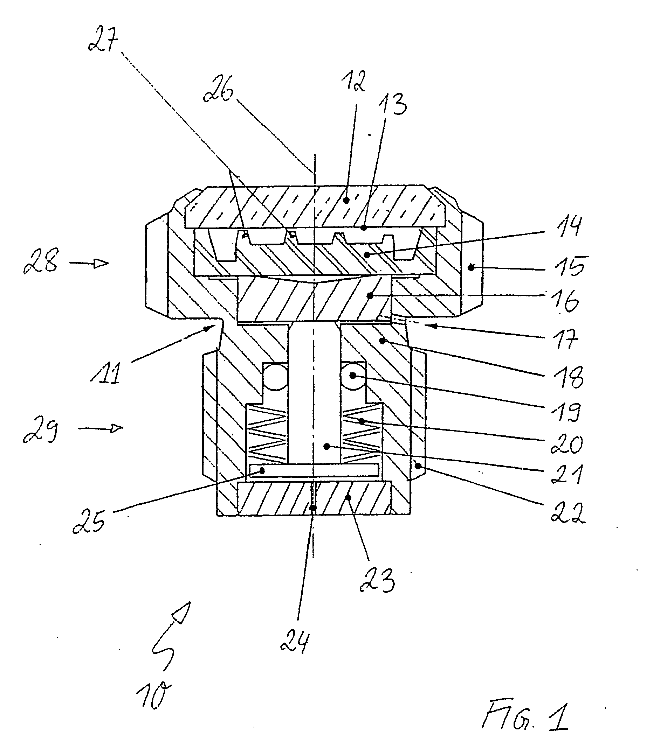

Fig. 1 zeigt eine Druckanzeigevorrichtung (Druckindikator) 10, die ein einstückiges Gehäuse (Monoblockgehäuse) 18 umfasst. Das Gehäuse 18 hat die äussere Form einer Schraube mit einer Schraubenachse 26 und einem Kopfteil (Schraubenkopf) 28 und einem Gewindeteil 29. Das Gehäuse 18 weist im Kopfteil 28 entsprechende Schlüsselflächen 15 am äusseren Umfang auf. Im unteren Bereich des Gehäuses 18, dem Gewindeteil 29, ist koaxial zur Achse 26 ein Einschraubgewinde 22 angeordnet, mit dem die Druckanzeigevorrichtung 10 vorzugsweise in einen an einer Druckgasflasche angebrachten Hahn eingeschraubt werden kann. Innerhalb des mit dem Einschraubgewinde 22 versehenen Gehäuseabschnitts ist in Richtung der Achse 26 ein Kolben 21 mit einer Kopfplatte 25 geführt. Die Kopfplatte 25 ist der Druckseite zugewandt. Eine Feder 20, die sich am unteren Ende auf der Kopfplatte 25 und am oberen Ende am Gehäuse 18 abstützt, wirkt dem unter Druck stehenden Kolben 21 entgegen und bestimmt den axialen Weg desselben.

Um einen Gasaustritt zwischen Kolben 21 und Gehäuse 18 zu verhindern, ist eine ringförmige Dichtung 19, vorzugsweise in Form eines O-Ringes, eingebaut. Das Ende des Einschraubteils des Gehäuses 18 erhält einen massiven Deckel 23 mit einer kleinen Dämpfungsbohrung 24, welche den Gasdurchfluss begrenzt. Mit dieser Bauweise wird verhindert; dass Gas austreten kann, wenn der obere Teil des Druckindikators 10, der dem Schraubenkopf entspricht, beschädigt oder gar weggebrochen wird. Eine Sollbruchstelle 11 im Mittelbereich des Gehäuses 18 zwischen Kopfteil 28 und Gewindeteil 29 soll im Falle eines Sturzes der Flasche oder dergleichen einen Bruch an der richtigen Stelle erleichtern, ohne dass der Gewindeteil mit dem Einschraubgewinde 22 aus der entsprechenden Gewindebohrung des Hahns gerissen wird. Der Kolben 21 endet auf der Höhe der Sollbruchstelle 11 und ist daher im Falle eines Wegbrechens des Gehäuses 18 an der Sollbruchstelle 11 nicht gefährdet.

Im oberen Abschnitt des Druckindikators 10 befindet sich eine vom Kolben 21 beaufschlagte Druckplatte 16, welche einen darüber angeordneten Stempel 14 gegen die als Kontaktfläche 13 wirkende Unterseite eines matten Frontglases 12 drückt, welches das Gehäuse 18 nach oben hin abschliesst. Der aus einem elastisch deformierbaren Material, z.B. Gummi, bestehende Stempel 14 ist am Rand zwischen Frontglas 12 und Gehäuse 18 fixiert und trägt im Innenbereich auf der Oberseite verteilt angeordnet unterschiedlich hoch ausgeformte Zeichen 27. Durch das matte Frontglas 12 wird verhindert, dass die ungleich hohen Zeichen (Ziffern, Lettem oder dgl.) beim Draufschauen auf den Druckindikator 10 von oben direkt ersichtlich sind. Wird nun der Kolben 21 durch den Gasdruck nach oben (aussen) gedrückt, schiebt sich die Druckplatte 16 mit dem Stempel 14 gegen die matte Seite des Frontglases 12. Durch den Kontakt des vorzugsweise dunkel eingefärbten Gummi- oder gummiähnlichen Stempels mit der hellen, matten Oberfläche des Frontglases 12 wird das höchste der Zeichen 27 als erstes von aussen sichtbar. Die Höhenabstufungen der Zeichen 27 auf dem Stempel 14 entsprechen dem Hub, welcher der Kolben 21 bei zunehmendem Druck ausführt. Ist die Druckgasflasche voll, werden alle Zeichen 27 gegen das matte Frontglas 12 gedrückt. Die Zeichen "erlöschen" dann bei abfallendem Druck der Reihe nach, ähnlich wie dies bei einer LCD(Liquid Crystal Display)-Anzeige der Fall ist.

Aus praktischen Gründen wird die Anzeige, d.h., die Anordnung der Zeichen 27 auf der Oberseite des Stempels 14 so gestaltet, dass sie in keiner Stellung nach dem Festziehen bei der Montage auf dem Kopf zu stehen scheint. Bei einer anderen (in Fig. 1 nicht dargestellten) Ausführungsform ist anstelle des Stempels 14 mit den erhabenen Zeichen 27 ein flacher Stempel eingebaut. Drucklos bleibt der Stempel vom Frontglas zurück und macht keinen Kontakt. Bei dieser Ausführungsform trägt das aus Kunststoff gespritzte Frontglas die nach innen vorstehenden Zeichen. Hier besteht die Möglichkeit einer Beschriftung auf der Innenseite des Frontglases. Die restliche Funktion ist gleich wie bei der ersten Ausführungsform.

Eine weitere Ausführungsform zeichnet sich dadurch aus, dass der Raum zwischen dem glatten Frontglas 12 und dem Stempel 14 mit einem Kontrastmittel gefüllt ist. Der Stempel 14 oder ein vergleichbares Anzeigemittel muss dadurch nicht mehr weich und elastisch sein. Sie können aus härterem Kunststoff oder aus Metall gefertigt sein. Drucklos ist der Stempel 14 wegen des Kontrastmittels nicht sichtbar. Wird er durch den Druck in der Flasche gegen das Frontglas 12 gedrückt, wird das dazwischenliegende Kontrastmittel verdrängt, und die Kontur des Zeichens 27 auf dem Stempel 14 wird sichtbar.

Es ist in diesem Zusammenhang aber auch eine gewissermassen kontinuierliche Anzeige möglich: Wird beispielsweise ein gummielastischer Stempel 14 verwendet, der keine speziellen Zeichen 27 trägt, sondern nach oben hin kegelig oder kalottenförmig ausgebildet ist, wird der Stempel je nach Druck mehr oder weniger stark an das matte Frontglas 12 gedrückt und somit gestaucht. Es erscheint als Anzeige ein ausgefüllter Kreis mit mehr oder weniger grossem Durchmesser, wobei sich der Durchmesser mit dem Druck kontinuierlich ändert. Es versteht sich von selbst, dass in dieser Ausgestaltung auf dem Frontglas 12 Skalenkreise angebracht sein können, die einem bestimmten Druckwert entsprechen.

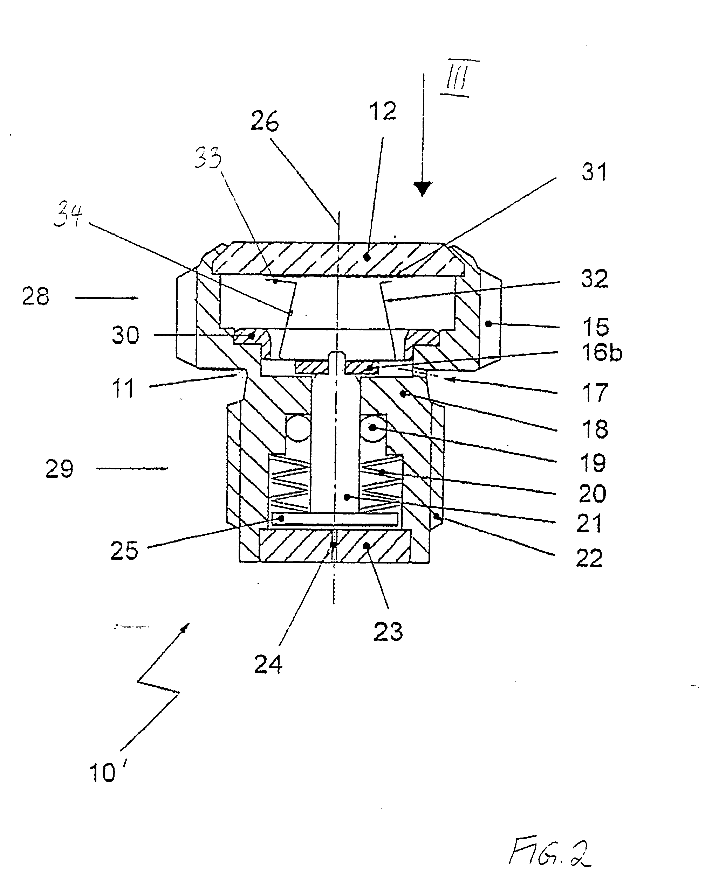

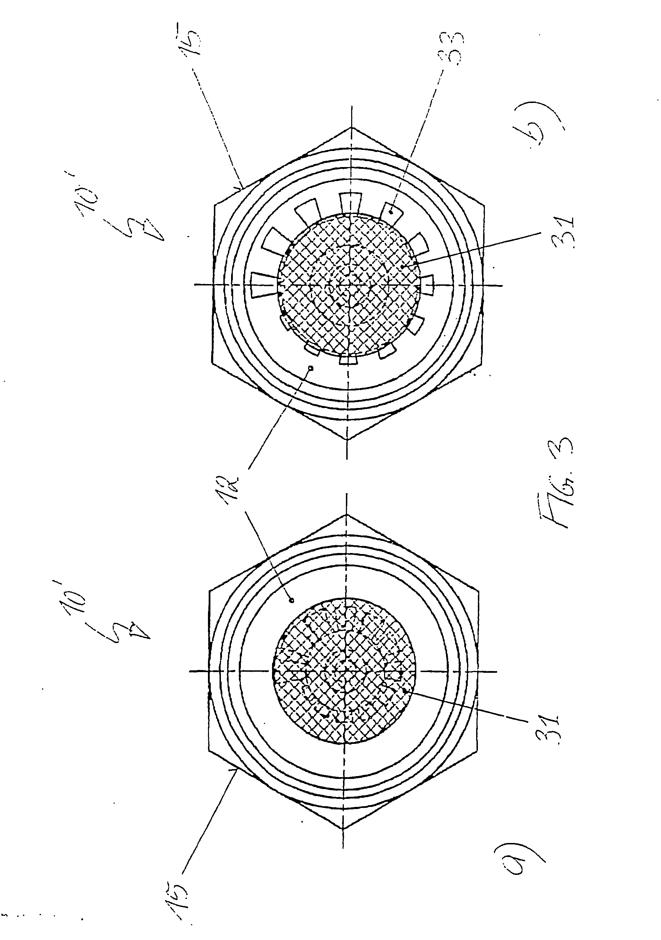

In Fig. 2 ist ein bevorzugtes Ausführungsbeispiel der Erfindung im Längsschnitt dargestellt. Die Druckanzeigevorrichtung 10' der Fig. 2 ist in den meisten Teilen identisch mit dem Beispiel der Fig. 1, so dass für diese Teile die gleichen Bezugszeichen verwendet werden. Anstelle des Stempels 14 aus Fig. 1 ist hier eine spezielle Zeigerfeder 32 eingebaut. Die (scheibenförmige) Zeigerfeder 32 sitzt auf einer Druckplatte 16b und greift mit ihrem äusseren Rand hinter einen am Gehäuse 18 befestigten Anschlagring 30. Sie trägt auf ihrem Umfang eine Anzahl sich nach oben ersteckender, am oberen Ende abgeköpfter Zeiger 34 mit ungleich langen, zu einer (undurchsichtigen) bedruckten Fläche 31 auf der Unterseite des Frontglases 12 kontrastreichen Zeigerköpfen 33. Druckfrei ist die Zeigerfeder 32 in Ruhestellung. Alle Zeigerköpfe 33 befinden sich hinter der runden, bedruckten Fläche 31 auf dem Frontglas, d.h., werden von dieser abgedeckt und sind dadurch nicht sichtbar (Fig. 3a).

Ist die Flasche voll, wird die Druckplatte 16b maximal nach vorne (oben) gedrückt. Dadurch verbiegt sich die Zeigerfeder 32 im Bereich zwischen der Druckplatte 16b und dem Anschlagring 30. Dies hat zur Folge, dass sich alle Zeiger 34 und damit alle Zeigerköpfe 33 nach aussen bewegen und nach Massgabe ihrer Länge sukzessive hinter der bedruckten Fläche 31 hervortreten und dadurch sichtbar werden (Fig. 3b). Fällt der Druck in der Flasche ab, bewegt sich die Druckplatte 16b vom Frontglas 12 weg. Auf diese Weise kann sich der verbogene Bereich zwischen Druckplatte 16b und Anschlagring 30 ein wenig zurückbiegen. Dies hat zur Folge, dass der Zeiger 34 mit dem kürzesten Zeigerkopf 33 als erster unter der bedruckten Fläche 31 des Frontglases 12 verschwindet. Die Anzahl der verbleibenden Zeigerköpfe gibt Aufschluss über den Füllzustand der Flasche. Bei der Bedruckung des Frontglases 12 kann auf einfache Weise eine Beschriftung eingefügt werden, welche einen weiteren Hinweis auf das Gas in der Flasche geben kann. Es können auch Herstelleraufdrucke gemacht werden. Bei einem Druckindikator dieser Bauart ist es möglich, eine noch feinere Unterteilung der Anzeige zu gewährleisten. Zudem ist ein maximaler Anzeigekontrast möglich. Das Beispiel gemäss Fig. 2 zeichnet sich damit durch folgende Merkmale aus:
- Durch die richtige Auslegung der Zeigerfeder 32 wird eine Übersetzung erreicht, welche einen grossen Ausschlag des Zeigerkopfes 33 zur Folge hat, ohne dass weitere Teile notwendig sind.
- Eine Änderung der Übersetzung wird auf einfache Weise dadurch erreicht, dass der Durchmesser der Druckplatte 16b verändert wird.

Insgesamt ergibt sich mit der Erfindung in Fällen, in welchen keine besondere Genauigkeit gefordert ist, eine neue und besonders vorteilhafte Möglichkeit der Druckanzeige: Der erfindungsgemässe Druckindikator hat die Art einer Schraube. Damit wird es möglich, den Druck einer Gasflasche ständig anzuzeigen. Der Druckindikator wird direkt in eine zusätzliche Bohrung seitlich am Hahn eingeschraubt. Die Strapazierfähigkeit des Indikators übertrifft alle bisher bekannten Manometer bei weitem, sogar die des Hahns, in welchen er eingeschraubt ist. Selbst das Abwürgen oder Wegbrechen des vorstehenden Teiles führt zu keinem Unfall, zu keiner Undichtheit. Dabei ist die Grösse so bemessen (mit einer Länge von z.B. 20 mm und einem max. Durchmesser von z.B. 19,5 mm, was einem Schraubenkopf mit der Schlüsselweite 17 mm entspricht), dass eine Schutzkappe, welche vorschriftsgemäss den Hahn schützt, weiterhin verwendet werden kann. Bei Flaschen mit Ventilen, welche zum Transport nicht mit Schutzkappen geschützt werden müssen, ergibt sich ein noch grösserer Vorteil damit, dass ohne Manipulationen der Druck in der Flasche auf einen Blick ersichtlich ist. Damit werden logistische Probleme gelöst. Der Aufbau ist sehr einfach, so dass bei unverändert hoher Sicherheit Kosten eingespart werden können.

Dadurch, dass keine Übersetzung oder sonstige heikle Teile benötigt werden, ist der Druckindikator 10 nach der Erfindung sehr strapazierfähig. Der Einbau des Kolbens 21 mit einer Kopfplatte 25 verhindert, dass ein beschädigter oder weggebrochener Oberteil zu Undichtheit und Unfällen führt. Die Anwendung einer Zeigerfeder 32 mit unterschiedlich langen Zeigerköpfen 33 führt zu einem sehr einfachen Monoblockgehäuse (18), welches an beiden Enden einen "Deckel" (Deckel 23 bzw. Frontglas 12) eingerollt oder eingebördelt erhält. Zum Schutz bei einer Undichtheit der Dichtung 19 ist der Druckindikator mit einer Druckausgleichs- bzw. Sicherheitsbohrung 17 versehen. Das Frontglas 12 ist so gegen Ueberdruck geschützt.

### BEZUGSZEICHENLISTE

- 10,10': Druckanzeigevorrichtung (Druckindikator)
- 11: Sollbruchstelle
- 12: Frontglas
- 13: Kontaktfläche
- 14: Stempel
- 15: Schlüsselfläche
- 16,16b: Druckplatte
- 17: Druckausgleichsbohrung
- 18: Gehäuse (einstückig)
- 19: Dichtung
- 20: Feder
- 21: Kolben
- 22: Einschraubgewinde
- 23: Deckel
- 24: Dämpfungsbohrung
- 25: Kopfplatte
- 26: Achse
- 27: Zeichen (Ziffern, Lettem etc.)
- 28: Kopfteil
- 29: Gewindeteil
- 30: Anschlagring
- 31: bedruckte Fläche
- 32: Zeigerfeder
- 33: Zeigerkopf
- 34: Zeiger

## Patentansprüche

1. Druckanzeigevorrichtung (10, 10'), welche einen in einem Gehäuse (18) gegen den Druck einer Feder (20) in einer Achse (26) verschiebbar gelagerten, mit dem zu messenden Druck beaufschlagbaren Kolben (21), sowie mit dem Kolben (21) in Wirkverbindung stehende optische Anzeigemittel (12, 14; 31,..,34) umfasst, **dadurch gekennzeichnet, dass** die optischen Anzeigemittel ein quer zur Achse (26) angeordnetes Frontglas (12) und mehrere durch den Kolben (21) relativ zum Frontglas (12) bewegbare Anzeigeelemente (27; 33, 34) umfassen, welche jeweils bei unterschiedlichen Drücken zwischen einer ersten Position, in welcher sie von aussen durch das Frontglas (12) optisch sichtbar sind und einer zweiten Position, in welcher sie von aussen durch das Frontglas (12) optisch nicht sichtbar sind, wechseln, dass die optischen Anzeigemittel eine Mehrzahl von Zeigern (34) umfassen, dass sich die Zeiger (34) beim druckbedingten Verschieben des Kolbens (21) in Achsenrichtung quer zur Achse (26) bewegen, und dass am Frontglas (12) optische Abdeckmittel (31) vorgesehen sind, durch welche die Zeiger (34) je nach Druck von aussen durch das Frontglas (12) sichtbar oder nicht sichtbar sind.

2. Druckanzeigevorrichtung nach Anspruch 1, **dadurch gekennzeichnet, dass** sich die Zeiger (34) in radialer Richtung bewegen.

3. Druckanzeigevorrichtung nach Anspruch 1 oder 2, **dadurch gekennzeichnet, dass** die Zeiger (34) Teil einer mit dem Kolben (21) in Eingriff stehenden Zeigerfeder (32) sind, und dass die Zeigerfeder (32) derart ausgebildet ist, dass sich die Zeiger (34) beim druckbedingten Verschieben des Kolbens (21) in Achsenrichtung und beim damit verbundenen Verbiegen der Zeigerfeder (32) quer zur Achse (26) bewegen.

4. Druckanzeigevorrichtung nach Anspruch 3, **dadurch gekennzeichnet, dass** die Zeigerfeder (32) scheibenförmig ausgebildet ist, dass die Zeigerfeder (32) sich mit ihrem äusseren Rand an einem darüber angeordneten, am Gehäuse (18) befestigten Anschlagring (30) abstützt und im zentralen Bereich von dem Kolben (21) beaufschlagt wird, dass die Zeiger (34) sich in Achsenrichtung nach oben erstrecken und am oberen Ende quer zur Achsenrichtung abgekröpft sind und im abgekröpften Bereich unterschiedlich lange Zeigerköpfe (33) aufweisen, und dass die Abdeckmittel einen auf der Unterseite des Frontglases (12) angeordnete, kreisförmige bedruckte Fläche (31) umfassen, welche die Zeigerköpfe (33) im drucklosen Zustand der Druckanzeigevorrichtung (10') optisch abdeckt.

5. Druckanzeigevorrichtung nach einem der Ansprüche 1 bis 4, **dadurch gekennzeichnet, dass** die Druckanzeigevorrichtung (10) die äussere Gestalt einer Schraube mit einem Kopfteil (28) und einem Gewindeteil (29) aufweist, und dass die optischen Anzeigemittel (12, 14; 31,..,34) im Kopfteil (28) und der Kolben im Gewindeteil (29) angeordnet sind.

6. Druckanzeigevorrichtung nach Anspruch 5, **dadurch gekennzeichnet, dass** zwischen dem Kopfteil (28) und dem Gewindeteil (29) im Gehäuse (18) eine Sollbruchstelle (11) vorgesehen ist, dass der Kolben (21) unterhalb der Sollbruchstelle (11) mittels einer Dichtung (19) abgedichtet ist, und dass zwischen dem oberen Ende des Kolbens (21) und dem Stempel (14) bzw. der Zeigerfeder (32) eine Druckplatte (16, 16b) zum Verteilen des Kolbendruckes angeordnet ist.

7. Druckanzeigevorrichtung nach einem der Ansprüche 1 bis 6, **dadurch gekennzeichnet, dass** das Gehäuse (18) einstückig und im Kopfteil (28) nach aussen hin durch das Frontglas (12) abgeschlossen ist, und dass im Gehäuse (18) zwischen dem Frontglas (12) und dem Gewindeteil (29) eine Druckausgleichsbohrung (17) nach aussen führt.

8. Druckanzeigevorrichtung nach einem der Ansprüche 1 bis 7, **dadurch gekennzeichnet, dass** das Gehäuse (18) einstückig und im Gewindeteil (29) nach aussen hin durch einen Deckel (23) abgeschlossen ist, und dass im Deckel (23) eine nach aussen führende Dämpfungsbohrung (24) vorgesehen ist.

9. Druckanzeigevorrichtung nach einem der Ansprüche 7 oder 8, **dadurch gekennzeichnet, dass** das Frontglas (12) bzw. der Deckel (23) in das Gehäuse (18) eingerollt oder eingebördelt sind.

## Claims

1. A pressure indicator device (10, 10') which comprises a piston (21), mounted displaceably in a housing (18) along an axis (26) counter to the pressure of a spring (20) and capable of being acted upon by the pressure to be measured, and optical indicator means (12, 14; 31,...,34) operatively connected to the piston (21), **characterized in that** the optical indicator means comprise a front glass (12) arranged transversely to the axis (26) and one or more indicator elements (27; 33, 34) which are movable in relation to the front glass (12) by means of the piston (21) and which in each case change in the event of different pressures between a first position, in which they are optically visible from outside through the front glass (12), and a second position, in which they are optically not visible from outside through the front glass (12), **in that** the optical indicator means comprise a plurality of pointers (34), **in that** during the pressure-induced displacement of the piston (21) in the axial direction, the pointers (34) move transversely to the axis (26), and **in that**, on the front glass (12), optical masking means (31) are provided, through which the pointers (34) are visible or not visible through the front glass (12) from outside, depending on the pressure.

2. The pressure indicator device as claimed in claim 1, **characterized in that** the pointers (34) move in the radial direction.

3. The pressure indicator device as claimed in claim 1 or 2, **characterized in that** the pointers (34) are part of a pointer spring (32) engaged with the piston (21), and **in that** the pointer spring (32) is designed in such a way that, during the pressure-induced displacement of the piston (21) in the axial direction and during the associated bending of the pointer spring (32), the pointers (34) move transversely to the axis (26).

4. The pressure indicator device as claimed in claim 3, **characterized in that** the pointer spring (32) is of disk-shaped design, **in that** the pointer spring (32) is supported with its outer margin on a stop ring (30) arranged above it and fastened to the housing (18) and is acted upon in the central region by the piston (21), **in that** the pointers (34) extend upward in the axial direction, are bent transversely to the axial direction at the upper end and have pointer heads (33) of different lengths in the bent region, and **in that** the masking means comprise a circular printed face (31) which is arranged on the underside of the front glass (12) and which optically masks the pointer heads (33) when the pressure indicator device (10') is in the pressureless state.

5. The pressure indicator device as claimed in one of claims 1 to 4, **characterized in that** the pressure indicator device (10) has the external configuration of a screw with a head part (28) and with a threaded part (29), and **in that** the optical indicator means (12, 14; 31,...,34) are arranged in the head part (28) and the piston is arranged in the threaded part (29).

6. The pressure indicator device as claimed in claim 5, **characterized in that** a predetermined breaking point (11) is provided between the head part (28) and the threaded part (29) in the housing (18), **in that** the piston (21) is sealed off below the predetermined breaking point (11) by means of a seal (19), and **in that** a pressure plate (16, 16b) for distributing the piston pressure is arranged between the upper end of the piston (21) and the plunger (14) or the pointer spring (32).

7. The pressure indicator device as claimed in one of claims 1 to 6, **characterized in that** the housing (18) is in one piece and is closed off in the head part (28) outwardly by means of the front glass (12), and **in that** a pressure equalizing bore (17) leads outward between the front glass (12) and the threaded part (29) in the housing (18).

8. The pressure indicator device as claimed in one of claims 1 to 7, **characterized in that** the housing (18) is in one piece and is closed off in the threaded part (29) outwardly by means of a cover (23), and **in that** a damping bore (24) leading outward is provided in the cover (23).

9. The pressure indicator device as claimed in either one of claims 7 or 8, **characterized in that** the front glass (12) and the cover (23) are rolled or crimped into the housing (18).

## Revendications

1. Dispositif d'indication de pression (10, 10') qui comprend un piston (21) exposé à la pression à mesurer logé dans un boîtier (18) de manière à pouvoir coulisser dans un axe (26) contre la pression d'un ressort (20) ainsi que des moyens d'indication optiques (12, 14 ; 31, ..., 34) en liaison active avec le piston (21), **caractérisé en ce que** les moyens d'indication optiques comprennent une vitre frontale (12) disposée transversalement par rapport à l'axe (26) et plusieurs éléments indicateurs (27 ; 33, 34) pouvant être déplacés par le piston (21) par rapport à la vitre frontale (12), lesquels, en présence de pressions différentes, changent à chaque fois entre une première position dans laquelle ils sont visibles optiquement depuis l'extérieur à travers la vitre frontale (12) et une deuxième position dans laquelle ils ne sont pas visibles optiquement depuis l'extérieur à travers la vitre frontale (12), que les moyens d'indication optiques comprennent une pluralité d'aiguilles (34), que les aiguilles (34) se déplacent transversalement par rapport à l'axe (26) lorsque le piston (21) se déplace dans le sens de l'axe sous l'effet de la pression, et que des moyens de masquage optiques (31) sont prévus sur la vitre frontale (12), par le biais desquels les aiguilles (34) sont, suivant la pression, visibles ou non depuis l'extérieur à travers la vitre frontale (12).

2. Dispositif d'indication de pression selon la revendication 1, **caractérisé en ce que** les aiguilles (34) se déplacent dans le sens radial.

3. Dispositif d'indication de pression selon la revendication 1 ou 2, **caractérisé en ce que** les aiguilles (34) font partie d'un ressort d'aiguille (32) qui est en prise avec le piston (21) et que le ressort d'aiguille (32) est configuré de telle sorte que les aiguilles (34) se déplacent dans le sens de l'axe lors d'un déplacement du piston (21) sous l'effet de la pression et se déplacent transversalement par rapport à l'axe (26) lors de la flexion associée du ressort d'aiguille (32).

4. Dispositif d'indication de pression selon la revendication 3, **caractérisé en ce que** le ressort d'aiguille (32) est réalisé en forme de disque, que le ressort d'aiguille (32) s'appuie avec son bord extérieur sur une bague de butée (30) disposée au-dessus de celui-ci et fixée sur le boîtier (18) et il est sollicité par le piston (21) dans la zone centrale, que les aiguilles (34) s'étendent vers le haut dans le sens de l'axe et sont coudées transversalement par rapport au sens de l'axe au niveau de leur extrémité supérieure et présentent, dans la zone coudée, des têtes d'aiguille (33) de différentes longueurs, et que les moyens de masquage comprennent une surface (31) imprimée circulaire disposée sur le dessous de la vitre frontale (12), laquelle recouvre optiquement les têtes d'aiguille (33) lorsque le dispositif d'indication de pression (10') n'est pas exposé à la pression.

5. Dispositif d'indication de pression selon l'une des revendications 1 à 4, **caractérisé en ce que** le dispositif d'indication de pression (10) présente la forme extérieure d'une vis avec une partie tête (28) et une partie filet (29), et que les moyens d'indication optiques (12, 14 ; 31, ..., 34) sont disposés dans la partie tête (28) et le piston dans la partie filet (29).

6. Dispositif d'indication de pression selon la revendication 5, **caractérisé en ce qu'**un point de rupture voulu (11) est prévu dans le boîtier (18) entre la partie tête (28) et la partie filet (29), que le piston (21) est rendu étanche sous le point de rupture voulu (11) au moyen d'un joint (19) et qu'une plaque de pression (16, 16b) destinée à répartir la pression du piston est disposée entre l'extrémité supérieure du piston (21) et le poinçon (14) ou le ressort d'aiguille (32).

7. Dispositif d'indication de pression selon l'une des revendications 1 à 6, **caractérisé en ce que** le boîtier (18) est monobloc et fermé vers l'extérieur dans la partie tête (28) par la vitre frontale (12), et qu'un orifice d'équilibrage de la pression (17) mène vers l'extérieur dans le boîtier (18) entre la vitre frontale (12) et la partie filet (29).

8. Dispositif d'indication de pression selon l'une des revendications 1 à 7, **caractérisé en ce que** le boîtier (18) est monobloc et fermé vers l'extérieur dans la partie filet (29) par un couvercle (23), et qu'un orifice d'amortissement (24) menant vers l'extérieur est prévu dans le couvercle (23).

9. Dispositif d'indication de pression selon l'une des revendications 7 ou 8, **caractérisé en ce que** la vitre frontale (12) ou le couvercle (23) sont enroulés ou sertis dans le boîtier (18).
